# EUROPÄISCHE PATENTANMELDUNG

(11) **EP 2 290 029 A1**
(43) Veröffentlichungstag der Anmeldung: **02.03.2011**
(21) Anmeldenummer: 09168705.3
(22) Anmeldetag: 26.08.2009
(51) Int. Cl.: C09J 123/12

(54) **Heissschmelzklebstoffe mit verbesserter Haftung auf niederenergetischen Oberflächen**

(71) Anmelder: Sika Technology AG, 6340 Baar (CH)
(72) Erfinder: Urbach, Dirk, 22926, Ahrensburg (DE); Paschkowski, Kai, 21635, Jork (DE); Linnenbrink, Martin, 21641, Apensen (DE)
(74) Vertreter: Sika Patent Attorneys

(57) **Zusammenfassung**

Die vorliegende Erfindung betrifft eine Heissschmelzklebstoffzusammensetzung, deren Verwendung und einen Verbundkörper umfassend die Heissschmelzklebstoffzusammensetzung. Die Heissschmelzklebstoffzusammensetzung umfasst ein bei 25°C festes Polyolefin P, ein Weichharz WH mit einem Erweichungspunkt zwischen -10°C und 40°C und ein polar modifiziertes Polyolefinwachs PW.

## Beschreibung

### Technisches Gebiet

Die Erfindung betrifft das Gebiet der Heissschmelzklebstoffe insbesondere der Kaschierklebstoffe.

### Stand der Technik

Heissschmelzklebstoffe sind seit langem bekannt und werden als Kaschierklebstoffe eingesetzt. Zur Abdichtung von Untergründen gegen Wasserdurchstoss sind in der Baubranche wasserdichte Membranen bekannt. Beispielsweise beschreibt US 4,065,924 eine Schottschicht verbunden mit einer Oberschicht, wobei die Schottschicht auf dem Untergrund angeordnet ist und die Oberschicht den Verbund mit dem aufgetragenen Beton gewährleistet, indem sie von dem aufgetragenen Beton durchsetzt wird.

Häufig weisen solche wasserdichten Membranen Heissschmelzklebstoffe auf, welche als Kaschierklebstoffe den Verbund der Schottschicht mit der Oberschicht oder direkt mit dem aufgetragenen Beton zu gewährleisten. Solche Heissschmelzklebstoffe sollten eine Vielzahl von Eigenschaften aufweisen. Um einen optimalen Schutz des Betons vor Feuchtigkeit und Wasser aus dem Untergrund gewährleisten zu können, auch bei eventueller Beschädigung der wasserdichten Membran, muss der Heissschmelzklebstoff im ausgehärteten Zustand eine hohe Haftfestigkeit zur Schottschicht und zur Oberschicht aufweisen. Da die Schottschicht meist aus niederenergetischen Materialien gefertigt ist, ist eine gute Haftung auf ebensolchen vorteilhaft. Besonders schwierig gestaltet sich der Haftungsaufbau auf Polyolefinbasierten Materialien, insbesondere Polyethylen. Um auch die Hinterlaufsicherheit gewährleisten zu können, ist ein tiefes einpenetrieren des Heissschmelzklebstoff vor seiner Aushärtung in die Oberschicht erforderlich. Idealerweise penetriert der Beton, nach Applikation auf die Oberschicht, bis auf den Heissschmelzklebstoff durch und bindet so am Heissschmelzklebstoff an, wodurch eine hohe Hinterlaufsicherheit gegeben ist. Um eine gute Anbindung an den Beton zu erreichen, sollte der Heissschmelzklebstoff nach dem Aushärten eine hohe Eigenklebrigkeit aufweisen und möglichst weich sein. Ferner ist eine hohe Hydrolysestabilität im Falle des Hinterlaufens vorteilhaft. Auch sollte eine gewisse Anfangsklebrigkeit des Heissschmelzklebstoffs vor dem Aushärten gegeben sein, um bei der industriellen Fertigung von wasserdichten Membranen die Schottschicht mit der Oberschicht verbinden zu können.

### Darstellung der Erfindung

Die Aufgabe der vorliegenden Erfindung ist es daher, Heissschmelzklebstoffe zur Verfügung zu stellen, ein möglichst breites Haftungsspektrum aufweisen und insbesondere auf niederenergetischen Oberflächen gut haften.

Überraschenderweise hat sich gezeigt, dass eine Heissschmelzklebstoffzusammensetzung gemäss Anspruch 1 in der Lage ist, dieses Problem zu lösen. Die Heissschmelzklebstoffzusammensetzungen verfügen über ein breites Haftspektrum und haften gut auf niederenergetischen Oberflächen wie Polyolefinfolien, insbesondere Polyethylenfolien.

Weiter sind die Heissschmelzklebstoffzusammensetzungen aus arbeitshygienischen und -sicherheitsbedingten Aspekten sehr vorteilhaft.

Weitere Aspekte der vorliegenden Erfindung sind eine Verwendung gemäss Anspruch 11 der Heissschmelzklebstoffzusammensetzung zum Verkleben von Polyolefin-Folien Schäumen oder Textilien sowie ein Verbundkörper gemäss Anspruch 12.

Bevorzugte Ausführungsformen der Erfindung sind Gegenstand der Unteransprüche.

### Wege zur Ausführung der Erfindung

In einem ersten Aspekt betrifft die vorliegende Erfindung eine Heissschmelzklebstoffzusammensetzung, welche
a) mindestens ein bei 25°C festes Polyolefin **P;**
b) mindestens ein Weichharz **WH** mit einem Erweichungspunkt, gemessen nach der Ring & Kugel-Methode gemäss DIN EN 1238, zwischen -10°C und 40°C;
c) mindestens ein polar modifiziertes Polyolefinwachs **PW;**
umfasst.

Als Erweichungspunkt wird im vorliegenden Dokument jeweils der Erweichungspunkt, welcher nach der Ring & Kugel-Methode gemäss DIN EN 1238 gemessen wurde, verstanden.

Bevorzugt weist das Polyolefin **P** einen Erweichungspunkt, gemessen nach der Ring & Kugel-Methode gemäss DIN EN 1238, zwischen 70°C und 170°C, insbesondere zwischen 80°C und 120°C, bevorzugt zwischen 90°C und 110°C, auf.

Typischerweise ist das Polyolefin **P** ein thermoplastisches Poly-αolefin, bevorzugt ein ataktisches Poly-α-olefin (APAO).

Diese ataktischen Poly-α-olefine lassen sich durch Polymerisation von α-Olefinen, insbesondere von Ethen, Propen und 1-Buten, beispielsweise mit Ziegler-Katalysatoren herstellen. Es lassen sich Homopolymere oder Copolymere von α-Olefinen herstellen. Sie weisen gegenüber anderen Polyolefinen eine amorphe Struktur auf.

Unter einem "α-Olefin" wird in diesem Dokument in üblicher Definition ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Das Molekulargewicht Mₙ beträgt insbesondere zwischen 7'000 und 25'000 g/mol.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter "Molekulargewicht" versteht man im vorliegenden Dokument stets das Molekulargewichtsmittel Mₙ (Zahlenmittel).

Als "Raumtemperatur" wird im vorliegenden Dokument eine Temperatur von 23 °C bezeichnet.

Die fett markierten Bezeichnungen wie **P, WH, PW, S1, S2** und dergleichen im vorliegenden Dokument dienen lediglich für das bessere Leseverständnis und Identifizierung.

Vorteilhafterweise beträgt die Menge an Polyolefin **P** 30 - 60 Gew.-%, bevorzugt 40 - 50 Gew.-%, bezogen auf die Heissschmelzklebstoffzusammensetzung.

Die Heissschmelzklebstoffzusammensetzung enthält weiterhin mindestens ein Weichharz **WH** mit einem Erweichungspunkt zwischen -10°C und 40°C. Aufgrund der Tatsache, dass sich das Weichharz **WH** bei Raumtemperatur (23°C) sehr nahe am Erweichungspunkt befindet, ist es bei Raumtemperatur entweder bereits flüssig oder sehr weich. Ein Weichharz kann ein natürliches Harz oder synthetisches Harz sein.

Insbesondere sind derartige Weichharze **WH** mittel- bis höhermolekulare Verbindungen aus den Klassen der Parafin-, Kohlenwasserstoffharze, Polyolefine, Polyester, Polyether, Polyacrylate oder Aminoharze.

Das Weichharz **WH** weist vorzugsweise einen Erweichungspunkt zwischen 0°C und 25°C, insbesondere zwischen 10°C und 25°C, auf.

In einer bevorzugten Ausführungsform ist das Weichharz **WH** ein Kohlenwasserstoffharz, insbesondere ein aliphatisches C₅-C₉-Kohlenwasserstoffharz.

Besonders geeignet als Weichharz **WH** hat sich ein aliphatisches C₅-Kohlenwasserstoffharz gezeigt, welches unter dem Handelsnamen Wingtack® 10 von der Firma Cray Valley kommerziell vertrieben wird.

Weitere geeignete Weichharze sind beispielsweise Polyterpenharze, wie sie beispielsweise als Sylvares® TR A25 von Arizona Chemical, USA, kommerziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden.

Weitere geeignete Weichharze sind beispielsweise Escorez™ 5040 (Exxon Mobil Chemical).

Als Weichharze weiter geeignete Kohlenwasserstoffharze sind beispielsweise Picco A10 (Eastman Kodak) und Regalite R1010 (Eastman Kodak).

Die Menge an Weichharze **WH** beträgt typischerweise 30 - 60 Gew.-%, insbesondere 40 - 50 Gew.-%, bezogen auf die Heissschmelzklebstoffzusammensetzung. Ein Anteil unter 30 Gew.-% wirkt sich nachteilig auf die Eigenklebrigkeit der Heissschmelzklebstoffzusammensetzung aus.

Die Heissschmelzklebstoffzusammensetzung enthält weiterhin mindestens ein polar modifiziertes Polyolefinwachs **PW.**

Geeignete polar modifiziertes Polyolefinwachs **PW** entstehen durch Aufpfropfung von polaren Olefinmonomeren, beispielsweise α,β-ungesättigter Carbonsäuren und/oder deren Derivaten, etwa (Meth-)acrylsäure oder Maleinsäureanhydrid; und/oder substituierte und/oder unsubstituierte Styrole; auf Polyolefinwachse.

Bevorzugt handelt es sich bei dem polar modifizierten Polyolefinwachs **PW** um ein Maleinsäureanhydrid gepfropftes Polyolefinwachs.

Geeignete Polyolefinwachse als Grundlage zur Herstellung von polar modifizierten Polyolefinwachsen **PW** können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drucken und Temperaturen zu mehr oder minder verzweigten Wachsen umgesetzt werden; daneben Verfahren, bei denen Ethylen und/oder höhere 1-Olefine mit Hilfe metallorganischer Katalysatoren, beispielsweise Ziegler-Natta- oder Metallocenkatalysatoren zu unverzweigten oder verzweigten Wachsen polymerisiert werden.

Bevorzugt handelt es sich bei den Polyolefinwachsen um Homo- und Copolymere verschiedener Alkene.

Bevorzugt handelt es sich bei den Polyolefinwachsen um Homo- und Copolymere des Ethens und Propens.

Bevorzugt handelt es sich bei den Polyolefinwachsen um Homo- und Copolymere hergestellt am Ziegler- oder Metallocene-Katalysatorkontakt.

Besonders bevorzugt handelt es sich bei dem polar modifizierten Polyolefinwachs **PW** um ein Maleinsäureanhydrid gepfropftes Wachs aus Homo- und Copolymeren des Ethens und Propens, insbesondere bevorzugt um ein Maleinsäureanhydrid gepfropftes Polypropylen-Wachs.

Der Pfropfungsgrad des polar modifizierten Polyolefinwachs **PW** ist vorteilhaft über 1 Gew.-%, insbesondere über 3 Gew.-%, polarer Olefinmonomere, insbesondere Maleinsäureanhydrid, bezogen auf das Gewicht des Polyolefinwachs. Vorzugsweise beträgt dieser Pfropfungsgrad zwischen 2 und 15 Gew.-%, bevorzugt zwischen 4 und 15 Gew.-%, meist bevorzugt zwischen 8 und 12 Gew.-%.

Das polar modifizierte Polyolefinwachs **PW** weist vorzugsweise einen Erweichungspunkt zwischen 100°C und 200°C, insbesondere 120°C und 170°C, auf.

Das polar modifizierte Polyolefinwachs **PW** weist vorzugsweise eine Schmelzviskosität bei 170°C von 10 - 10'000 mPa•s, insbesondere 1000 - 5'000 mPa•s, auf.

In einer bevorzugten Ausführungsform ist das polar modifizierte Polyolefinwachs **PW** ein Maleinsäureanhydrid gepfropftes Polyethylen-Wachs oder ein Maleinsäureanhydrid gepfropftes Polypropylen-Wachs.

Die Menge an polar modifiziertem Polyolefinwachs **PW** beträgt typischerweise 1 - 20 Gew.-%, bevorzugt 2.5 - 10 Gew.-%, insbesondere bevorzugt 3 - 7 Gew.-%, bezogen auf die Heissschmelzklebstoffzusammensetzung. Bei einem Anteil unter 1 Gew.-% hat das polar modifizierte Polyolefinwachs **PW** keinen Effekt auf die Haftung der Heissschmelzklebstoffzusammensetzung.

Weiterhin kann die Heissschmelzklebstoffzusammensetzung weitere Bestandteile aufweisen. Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Es hat sich jedoch gezeigt, dass es besonders vorteilhaft ist, wenn die Gewichtssumme aller bei 25°C festen Polymere auf Olefinbasis **P** und aller Weichharze **WH** und aller polar modifizierten Polyolefinwachsen **PW** mehr als 60 Gew.-%, bevorzugt mehr als 80 Gew.-%, der Heissschmelzklebstoffzusammensetzung beträgt.

Als besonders vorteilhaft haben sich Heissschmelzklebstoffzusammensetzungen erwiesen, welche im Wesentlichen aus bei 25°C festem Polyolefin **P,** Weichharz **WH** und polarem Polyolefinwachs **PW** bestehen. Derartige Zusammensetzungen weisen neben diesen Bestandteilen nur unwesentliche, typischerweise weniger als 5 Gew.-%, insbesondere weniger als 1 Gew.-%, Anteile an anderen Bestandteilen auf. Insbesondere besteht die Heissschmelzklebstoffzusammensetzungen aus bei 25°C festem Polyolefin **P,** Weichharz **WH** und polarem Polyolefinwachs **PW.**

Grundsätzlich erfolgt die Herstellung auf übliche, dem Fachmann für Heissschmelzklebstoffe bekannte, Art und Weise.

Die Heissschmelzklebstoffzusammensetzungen werden durch Aufheizen verflüssigt, indem sich die thermoplastischen Inhaltsstoffe aufschmelzen. Die Viskosität der Heissschmelzklebstoffzusammensetzungen sollte angepasst sein auf die Applikationstemperatur. Typischerweise ist die Applikationstemperatur 100 bis 200 °C, insbesondere 150 bis 180 °C. Bei dieser Temperatur ist der Klebstoff gut verarbeitbar. Die Viskosität, bestimmt nach Brookfield Thermosel, beträgt vorzugsweise in diesem Temperaturbereich 1'500 - 50'000 mPa·s. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt. Insbesondere bevorzugt beträgt die Viskosität, bestimmt nach Brookfield Thermosel, im Temperaturbereich von 150 bis 180 °C 2'500 - 20'000 mPa•s.

Das durch die Abkühlung erfolgende Erstarren und Verfestigen des Klebstoffes bewirkt einen schnellen Festigkeitsaufbau und hohe Anfangshaftfestigkeit eines Klebverbundes. Es ist bei der Verwendung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist.

Es hat sich gezeigt, dass die beschriebenen erfindungsgemässen Heissschmelzklebstoffzusammensetzungen eine hohe Anfangsfestigkeit aufweisen und sich über hohe Festigkeit und Flexibilität in einen weiten Temperaturbereich auszeichnen.

Die beschriebenen erfindungsgemässen Heissschmelzklebstoffzusammensetzungen sind durch die Abwesenheit von Isocyanaten aufgrund von Aspekten der Arbeitshygiene und Arbeitssicherheit besonders vorteilhaft.

Weiter wurde gefunden, dass durch das polar modifizierte Polyolefinwachs **PW,** insbesondere durch ein Maleinsäureanhydrid gepfropftes Polyolefinwachs, die Heissschmelzklebstoffzusammensetzung deutlich besser auf niederenergetischen Oberflächen, insbesondere auf Polyethylen, haftet. Dieses Ergebnis ist unerwartet, da polar modifizierte Polypropylenwachse in der Literatur dafür bekannt sind, dass sie aufgrund ihres polaren Charakters bei unpolaren Klebstoffen als Haftvermittler zu polaren Substraten Einsatz finden. Eine Haftungsverbesserung zu niederenergetischen Oberflächen, insbesondere dem sehr niederenergetischen Polyethylen, ist überraschend. Daher weisen die Heissschmelzklebstoffzusammensetzung ein äusserst breites Haftspektrum auf unpolaren Kunststoffen, wie Polyethylen oder Polypropylen, auf, welche sich mit der Heissschmelzklebstoffzusammensetzungen, sogar ohne Primer, verkleben lassen.

Es hat sich zudem gezeigt, dass die beschriebenen Heissschmelzklebstoffzusammensetzungen sehr lagerstabil sind, über gute Verarbeitungseigenschaften, insbesondere im Applikationstemperaturbereich von 100 bis 200°C, aufweisen und bei diesen Temperaturen auch über längere Zeit viskositätsstabil sind. Die Aushärtung erfolgt geruchsfrei, schnell und auch bei dickschichtigen Anwendungen ohne Blasen. Die Heissschmelzklebstoffzusammensetzung zeichnet sich über gute Haftung, insbesondere starke Soforthaftung und Klebrigkeit, und eine gute Beständigkeit gegenüber Umwelteinflüssen, insbesondere gegen wässrige Medien wie beispielsweise Tenside, schwache Säuren und Laugen, aus und ist nicht korrosiv.

Weiter sind die beschriebenen erfindungsgemässen Heissschmelzklebstoffzusammensetzungen durch ihre Alterungs- und Wärmebeständigkeit besonders vorteilhaft.

Durch das mindestens eine Weichharz **WH** lässt sich die Heissschmelzklebstoffzusammensetzung in ihrem Abbindeverhalten positiv beeinflussen. Die Heissschmelzklebstoffzusammensetzung wird so weich, dass nach dem Abkühlen einer relativ dünnen Klebstoffschicht diese noch über Druck zum Auffliesen gebracht werden kann. Dieser Effekt ermöglicht beispielsweise bei der Verwendung in der wasserdichten Membran ein gutes Anfliessen an den Beton. So wird eine hohe Hinterlaufsicherheit erzeugt.

Die vorgängig beschriebenen Heissschmelzklebstoffzusammensetzungen können vielseitig eingesetzt werden, typischerweise in der Bau- und der Hygieneindustrie.

Es hat sich gezeigt, dass die vorgängig beschriebenen Heissschmelzklebstoffzusammensetzungen bestens zum Verkleben von Polyolefin-Materialien mit Schäumen, Faserwerkstoffen oder Folien verwendet werden können.

Weiterhin sind die Heissschmelzklebstoffzusammensetzungen auch sehr gut geeignet, um Sandwich-Panels zu kleben.

Ein weiterer Aspekt der Erfindung betrifft einen Verbundkörper aufweisend ein erstes Substrat **S1,** welches eine Polyolefin-Folie ist, eine vorgängig beschriebene Heissschmelzklebstoffzusammensetzung, sowie ein zweites Substrat **S2,** wobei die Heissschmelzklebstoffzusammensetzung zwischen erstem Substrat **S1** und zweitem Substrat **S2** angeordnet ist.

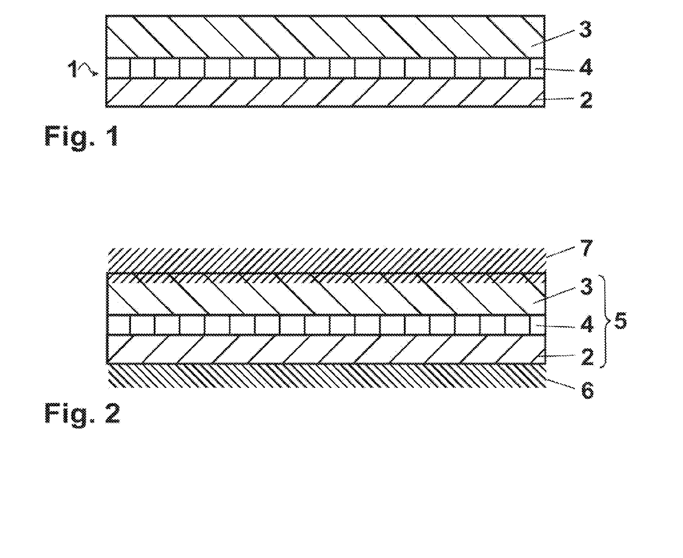

Figur 1 stellt einen schematischen Querschnitt durch einen derartigen Verbundkörper 1 dar, welcher ein erstes Substrat **S1** 2 und ein zweites Substrat **S2** 3 sowie eine Heissschmelzklebstoffzusammensetzung 4, welche zwischen erstem und zweitem Substrat angeordnet ist, und so diese zwei Substrate miteinander verklebt.

Als "Polyolefin-Folie" werden insbesondere biegsame flächige Polyolefine in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Polyolefin-Folien auch noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden auch derartige Folien als Polyolefin-Folien bezeichnet, welche nicht zu 100% aus Polyolefinen bestehen.

Das zweite Substrat **S2,** vielfach auch als Träger bezeichnet, kann von verschiedener Art und Natur sein. Die Substrate können beispielsweise aus Kunststoffen, insbesondere Polyolefine oder ABS, Metall, lackiertem Metall, aus Kunststoff, Holz, Holzwerkstoffen oder Fasermaterialien sein. Das Substrat ist vorzugsweise ein fester, geformter Körper.

Insbesondere handelt es sich beim ersten Substrat **S1** um eine Polyolefin-Folie und beim zweiten Substrat **S2** um ein poröses Material, insbesondere einen Polyolefin-Schaumstoff oder einen Polyolefin-Faserwerkstoff.

Bei Bedarf kann die Oberfläche des zweiten Substrates **S2** vorbehandelt sein. Insbesondere kann eine derartige Vorbehandlung ein Reinigen oder ein Auftragen eines Primers darstellen. Bevorzugt ist jedoch das Aufbringen von Primern nicht notwendig.

Der beschriebene Verbundkörper ist vorzugsweise ein Artikel der industriellen Fertigung, insbesondere ein Artikel zur Abdichtung von Untergründen oder Bauten gegen Wasserdurchstoss in der Baubranche wie beispielsweise wasserdichte Membranen.

Insbesondere bevorzugt ist der beschriebene Verbundkörper eine wasserdichte Membran, wobei es sich beim ersten Substrat **S1** um eine Polyolefin-Folie und beim zweiten Substrat **S2** um ein poröses Material, insbesondere einen Schaumstoff oder einen Faserwerkstoff.

Figur 2 zeigt die Verbauung einer solchen wasserdichten Membran 5. Das erste Substrat **S1** 2 ist auf dem Untergrund 6 angeordnet und das zweite Substrat **S2** 3 gewährleistet den Verbund mit dem aufgetragenen Beton 7, indem sie von dem aufgetragenen Beton durchsetzt wird.

Der Untergrund 6 kann dabei waagrecht sein oder auch nicht. Er kann weiterhin das Erdreich, ein Bauwerk oder eine Schalung sein. Typischerweise handelt es sich bei dem Untergrund um eine vertikal-positionierte Schalung aus Holz oder Stahlträgern. Beim Untergrund kann es sich auch um Isolationsmaterial handeln.

Im verbauten Zustand ist also bei einem solchen Verbundkörper 1 typischerweise an der vom ersten Substrat **S1** 2 abgewandten Seite des zweite Substrat **S2** 3 Beton 7 angeordnet.

Falls es sich bei dem Verbundkörper um eine wasserdichte Membran 5 handelt, weist das erste Substrat **S1** 2 typischerweise eine hohe Beständigkeit gegen Wasserdruck auf und zeigt gute Werte in Weiterreissversuchen und Perforationsversuchen, was besonders bei mechanischen Belastungen auf Baustellen von Vorteil ist.

Eine poröse Struktur des zweiten Substrat **S2** 3 ist der Elastizität der wasserdichten Membran 5 zuträglich, sie kann dadurch besser Zug- und Scherkräfte aushalten. Andererseits führt sie zu einer guten Aufnahme von flüssigem Beton und somit zu einem guten Verbund mit dem flüssigen sowie dem ausgehärteten Beton. Dies kann insbesondere bei grossen Flächenneigungswinkeln von Vorteil sein, damit der Beton 7 nicht auf dem zweiten Substrat **S2** abrutscht.

Vorzugsweise ist das zweite Substrat **S2** ein Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen von flüssigem Beton und/oder von der vorhergehend genannten Heissschmelzklebstoffzusammensetzung.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen. Besonders bevorzugt als Faserwerkstoff ist ein Filz oder Vlies. Weiter bevorzugt sind Faserwerkstoffe, die eine Maschenzahl (oder Meshzahl) von 5 - 30 pro 10 cm aufweisen. Solche Schichten aus Faserwerkstoffen bieten dieselben Vorteile wie sie vorgehend für die porösen Materialien erwähnt wurden und haben geringe Herstellkosten. Weiter können Faserwerkstoffe in der Regel sehr gleichmässig hergestellt werden, wodurch eine vergleichbare Durchdringung mit Beton erreicht werden kann.

Vorteilhafterweise besteht das zweite Substrat **S2** aus einem thermoplastischen Material und das Material ist ausgewählt aus der Gruppe umfassend Polyethylen mit hoher Dichte (HDPE), Polyethylenterephthalat (PET), Polystyrol (PS), Polypropylen (PP), Polyvinylchlorid (PVC), Polyamid (PA) und Kombinationen davon.

Falls es sich bei dem Verbundkörper um eine wasserdichte Membran 5 handelt, weist das zweite Substrat **S2** 3 typischerweise eine Dicke von 0.1 - 1 mm, bevorzugt 0.2 - 0.6 mm, insbesondere bevorzugt 0.4 - 0.55 mm auf.

Die Heissschmelzklebstoffzusammensetzung 4 ist zwischen erstem Substrat **S1** 2 und dem zweiten Substrat **S2** 3 angeordnet. Es kann jedoch auch von Vorteil sein, wenn die Heissschmelzklebstoffzusammensetzung 4 teilweise oder vollständig, bevorzugt teilweise in das Substrat **S2** eindringt, woraus sich ein besserer Verbund mit der Heissschmelzklebstoffzusammensetzung ergibt.

Weiter kann es bei einem solchen Verbundkörper im verbauten Zustand für die Verbindung der wasserdichten Membran mit dem Beton 7 vorteilhaft sein, wenn der Beton zumindest teilweise in Kontakt mit der Heissschmelzklebstoffzusammensetzung 4 ist. Dies kann dadurch geschehen, dass der Beton das poröse Material durchsetzt und somit in Kontakt mit der Heissschmelzklebstoffzusammensetzung gelangt und/oder dass die Heissschmelzklebstoffzusammensetzung das poröse Material durchsetzt und somit in Kontakt mit dem Beton gelangt.

Vorgehend genannte wasserdichte Membranen, umfassend die erfindungsgemässe Heissschmelzklebstoffzusammensetzung, sowie die Verwendung des erfindungsgemässen Heissschmelzklebstoffzusammensetzung in ebensolchen sind dahingehend vorteilhaft, dass einerseits die Heissschmelzklebstoffzusammensetzung die Verwendung von schwer zu verklebenden Polyolefin-Folien, welche aufgrund ihrer hohe Beständigkeit gegen Wasserdruck äusserst vorteilhaft sind, erlauben. Andererseits gewährleistet die Heissschmelzklebstoffzusammensetzung aufgrund ihrer Hydrophobizität und Widerstandsfähigkeit gegenüber Flüssigkeiten, der nichtkorrosiven Eigenschaften und der guten Haftungseigenschaften einen guten Verbund von erstem Substrat **S1** und zweitem Substrat **S2.** Dies verhindert beispielsweise Zwischenräume zwischen erstem Substrat **S1** und zweitem Substrat **S2** und erschwert das Hinterlaufen der wasserdichten Membran im Falle eines Lecks.

### Beispiele

**Tabelle 1. Charakterisierung der verwendeten Rohstoffe und deren Bezeichnung**

| | |
|---|---|
| ***P*** | Poly-α-olefin, Propen-reich |
| | Molekulargewicht (Mₙ): zwischen 17'000 und 20'000 g/mol |
| | Schmelzviskosität (190°C DIN 53 019): ca. 50'000 mPa•s |
| | Erweichungspunkt (Ring & Kugel, DIN EN 1238): 100°C |
| | Dichte: ca. 0.85 g/cm³ |
| ***WH*** | Wingtack® 10 |
| | (Erweichungspunkt: 10°C) |
| ***PW*** | Maleinsäureanhydridgepfropftes Polypropylen (durch Metallocen-Katalyse erhalten) |
| | Schmelzviskosität (170°C DIN 53 018): ca. 1'100 mPa•s |
| | Erweichungspunkt (Ring & Kugel, DIN EN 1238): 160°C |
| | Dichte: ca. 0.90 g/cm³ |
| | Tropfpunkt: ca. 160°C |
| ***Stab.*** | Phenolischer Wärmestabilisator |

Es wurde eine Heissschmelzklebstoffzusammensetzung **("HSZ")** hergestellt, indem die Inhaltsstoffe gemäss den in Tabelle 2 angegebenen Gewichtsteilen miteinander bei einer Temperatur von 150°C und unter Inertatmosphäre in einem Rührwerk vermengt wurden.

### Viskosität

Nach dem Aufschmelzen der Heissschmelzklebstoffzusammensetzung **HSZ** in einer verschlossenen Tube während 20 Minuten bei 140°C im Wärmeschrank wurden 9,7 g Klebstoff in eine Einweghülse abgewogen und während 20 Minuten im Viskosimeter bei der jeweiligen in Tabelle 2 angegebenen Temperatur temperiert. Die Messung der Viskosität erfolgte bei 150°C, 160°C, bzw. 180°C, bei 10 Umdrehungen pro Minute auf einem Brookfield DV-2 Thermosel Viskosimeter mit Spindel Nr. 27. Als Viskosität wird derjenige Wert ausgewählt, der sich nach 5 Minuten Messung einstellt. In Tabelle 2 wird der gemessene Wert bei 150°C als "Visk₁₅₀", bei 160°C als "Visk₁₆₀", bei 180°C als "Visk₁₈₀" und bei 200°C als "Visk₂₀₀" angegeben.

### Erweichungspunkt

Der Erweichungspunkt wurde nach der Ring & Kugel-Methode, DIN EN 1238, gemessen.

### Frühfestigkeitsaufbau

Die Heissschmelzklebstoffzusammensetzung **HSZ** wurde aufgeschmolzen und bei einer Klebstofftemperatur von 160 °C auf PP-Prüfkörper (100 mm x 25 mm x 5 mm)) appliziert und mit einem zweiten PP-Prüfkörper gefügt, Klebstoffdicke: 1 mm, Überlappungsfläche: 25 mm x 25 mm). Die Frühfestigkeit wurde durch Messung dieser Zugscherfestigkeitsprüfkörper nach 30 min, gemessen ab Auftrag der geschmolzenen Heissschmelzklebstoffzusammensetzung, mittels einer Zwick Zug-Prüfmaschine Z020 mit einer Messgeschwindigkeit von 10 mm/min bei 23°C und 50% rel. Luftfeuchtigkeit gemessen. In Tabelle 2 sind die gemessenen Maximalspannungen ("σₘₐₓ") nach 30 min angegeben.

**Tabelle 2 Heissschmelzklebstoffzusammensetzung HSZ.**

| | |
|---|---|
| ***P*** | 47.5 Gew.% |
| ***WH*** | 47.5 Gew.% |
| ***PW*** | 4.75 Gew.% |
| ***Stab.*** | 0.25 Gew.% |
| Erweichungspunkt [°C] | 131 |
| Visk₁₅₀ [Pa•s] | 9.0 |
| Visk₁₆₀ [Pa•s] | 6.0 |
| Visk₁₈₀ [Pa•s] | 3.5 |
| Visk₂₀₀ [Pa•s] | 2.2 |
| σₘₐₓ (30 min) [N/mm²] | 0.1 |

Es ist hierbei aus den Resultaten der Tabelle 2 ersichtlich, dass die Heissschmelzklebstoffzusammensetzung **HSZ** einen schnellen Festigkeitsaufbau aufweist.

## Patentansprüche

1. Heissschmelzklebstoffzusammensetzung umfassend
a) mindestens ein bei 25°C festes Polyolefin **P;**
b) mindestens ein Weichharz **WH** mit einem Erweichungspunkt, gemessen nach der Ring & Kugel-Methode gemäss DIN EN 1238, zwischen -10°C und 40°C;
c) mindestens ein polar modifiziertes Polyolefinwachs **PW.**

2. Heissschmelzklebstoffzusammensetzung gemäss Anspruch 1, **dadurch gekennzeichnet, dass** das Polyolefin **P** einen Erweichungspunkt, gemessen nach der Ring & Kugel-Methode gemäss DIN EN 1238, zwischen 70°C und 170°C, insbesondere zwischen 80°C und 120°C, bevorzugt zwischen 90°C und 110°C, aufweist.

3. Heissschmelzklebstoffzusammensetzung gemäss Anspruch 1 oder 2, **dadurch gekennzeichnet, dass** das Polyolefin **P** ein thermoplastisches Poly-α-olefin, bevorzugt ein ataktisches Poly-α-olefin (APAO), ist.

4. Heissschmelzklebstoffzusammensetzung gemäss einem der vorhergehenden Ansprüche, **dadurch gekennzeichnet, dass** die Menge an Polyolefin **P** 30 - 60 Gew.-%, bevorzugt 40 und 50 Gew.-%, bezogen auf die Heissschmelzklebstoffzusammensetzung beträgt.

5. Heissschmelzklebstoffzusammensetzung gemäss einem der vorhergehenden Ansprüche, **dadurch gekennzeichnet, dass** das Weichharz **WH** einen Erweichungspunkt zwischen 0°C und 25°C, insbesondere zwischen 10°C und 25°C, aufweist.

6. Heissschmelzklebstoffzusammensetzung gemäss einem der vorhergehenden Ansprüche, **dadurch gekennzeichnet, dass** das Weichharz **WH** ein Kohlenwasserstoffharz, insbesondere ein aliphatisches C₅-C₉-Kohlenwasserstoffharz, ist.

7. Heissschmelzklebstoffzusammensetzung gemäss einem der vorhergehenden Ansprüche, **dadurch gekennzeichnet, dass** die Menge an Weichharz **WH** 30 - 60 Gew.-%, insbesondere 40 - 50 Gew.-%, bezogen auf die Heissschmelzklebstoffzusammensetzung beträgt.

8. Heissschmelzklebstoffzusammensetzung gemäss einem der vorhergehenden Ansprüche, **dadurch gekennzeichnet, dass** das polare Polyolefinwachs **PW** einem Erweichungspunkt zwischen 100°C und 200°C, insbesondere 120°C und 170°C, aufweist.

9. Heissschmelzklebstoffzusammensetzung gemäss einem der vorhergehenden Ansprüche, **dadurch gekennzeichnet, dass** das polare Polyolefinwachs **PW** ein Maleinsäureanhydrid gepfropftes Polyethylen-Wachs oder ein Maleinsäureanhydrid gepfropftes Polypropylen-Wachs ist.

10. Heissschmelzklebstoffzusammensetzung gemäss einem der vorhergehenden Ansprüche, **dadurch gekennzeichnet, dass** das die Menge an polarem Polyolefinwachs **PW** 1 - 20 Gew.-%, insbesondere 2.5 - 10 Gew.-%, bezogen auf die Heissschmelzklebstoffzusammensetzung beträgt.

11. Verwendung einer Heissschmelzklebstoffzusammensetzung gemäss einem der Ansprüche 1 bis 10 zum Verkleben von Polyolefin-Materialien mit Schäumen, Faserwerkstoffen oder Folien.

12. Verbundkörper (1) aufweisend
- ein erstes Substrat **S1** (2), welches eine Polyolefin-Folie ist;
- eine Heissschmelzklebstoffzusammensetzung (4) gemäss einem der Ansprüche 1 bis 10, sowie
- ein zweites Substrat **S2** (3);
wobei die Heissschmelzklebstoffzusammensetzung zwischen erstem Substrat **S1** und Substrat **S2** angeordnet ist

13. Verbundkörper (1) gemäss Anspruch 12, **dadurch gekennzeichnet, dass** das erste Substrat **S1** (2) eine Polyolefin-Folie ist und das zweite Substrat **S2** (3) ein Polyolefin-Schaumstoff oder ein Polyolefin-Faserwerkstoff ist.

14. Verbundkörper (1) gemäss einem der Ansprüche 12 oder 13, **dadurch gekennzeichnet, dass** an der vom ersten Substrat **S1** (2) abgewandten Seite des zweite Substrat **S2** (3) Beton (7) angeordnet ist.

15. Verbundkörper (1) gemäss Anspruch 14, **dadurch gekennzeichnet, dass** es sich bei dem zweite Substrat **S2** (3) um ein poröses Material handelt und dass der Beton (7) zumindest teilweise in Kontakt mit der Heissschmelzklebstoffzusammensetzung (4) ist.
